# EUROPEAN PATENT SPECIFICATION

(11) **EP 2 577 982 B1**
(45) Date of publication and mention of the grant of the patent: **30.12.2020**
(21) Application number: 11726212.1
(22) Date of filing: 07.06.2011
(51) Int. Cl.: H04N 21/466, H04N 7/16

(54) **SYSTEM FOR OUTPUTTING A CHOICE RECOMMENDATION TO USERS**
System zur Ausgabe einer Auswahlempfehlung an Benutzer
Système de sortie de recommandation de choix aux utilisateurs

(30) Priority: 04.11.2010 EP 10190044; 07.06.2010 EP 10165126
(43) Date of publication of application: 10.04.2013
(73) Proprietor: Nederlandse Organisatie voor toegepast- natuurwetenschappelijk onderzoek TNO, 2595 DA 's-Gravenhage (NL)
(72) Inventor: VAN BRANDENBURG, Ray, NL-2628 VK Delft (NL); VAN DEVENTER, Mattijs Oskar, NL-2628 VK Delft (NL); VEUGEN, Peter, Joannes, Mathias, 2628 VK - Delft (NL)
(74) Representative: V.O.
(86) International application number: PCT/NL2011/050404
(87) International publication number: WO 2011/155827

(56) References cited:
- EP-A2- 1 841 219
- US-A1- 2002 194 586
- US-A1- 2004 003 392
- US-A1- 2004 098 744
- US-A1- 2006 212 900
- US-A1- 2006 282 856

## Description

### Field of the invention

The invention relates to a system comprising data processing means for outputting a (choice) recommendation to one or more users based on earlier choices made by them. Such a recommendation may be related to - not exclusively, however - to TV watching, which is seen as a good application example of such system.

### Background

In general, such systems, called recommender systems, recommendation systems or recommendation engines form or work with a specific type of information filtering system technique that attempts to recommend information items, generally referred to as "content (items)" or "programs" (films, television programs, video on demand items, music, books, news, images, web pages, etc.) that are likely to be of interest to the user. Typically, a recommender system compares a user profile to some reference characteristics, and seeks to predict the 'rating' that users would give to a content item they had not yet considered. These characteristics may be derived from the information item (the content-based approach) or the user's social environment (the collaborative filtering approach).

Television - which is used in the following as an exemplary domain in which the present (kind of) system can be used - is a medium that is typically used by several people at the same time; think of family or friends who watch a TV program together at the bar at the end of the day. On the other hand, people are all different, everyone has his own preferences. Current technology (IPTV) makes it possible for several users to make and control their own personal profile with preferences. These profiles, however, do not take into account the fact that people may have different preferences and requirements when they are together in a group. When program recommendations are given for a father who watches TV together with his child, it makes no sense, for example, to allow for the father's preference for war movies. Also a married couple together would probably watch different movies than they would watch separately. There is therefore a need for a system that takes into account the idea that composite groups behave differently from each of its members separately.

US 2003/237093 discloses a system which is able to determine which persons are present in a room, and to establish a joint profile made up from the individual profiles of those persons. The document proposes to detect user group changes that occur by one or more users leaving the viewing area or arriving into the viewing area. Suitable methods or systems can be utilized to ascertain whether a user leaves or arrives into the viewing area are known.

The document gives the example of use of login and logoff mechanism to detect the composition of the group of users. In another embodiment a fingerprint reader panel may be used that detects touching by the users' fingers when a user enters the viewing area. Another example is a physical push button provided on a display panel, used as a switch to indicate that the user has left the room. Another example is a radio smartcard badge utilized to ascertain when users enter and/or leave the viewing area, or an inductive badge. The system may be configured to detect the presence of users by the presence of a transmitting transmitter carried by their badge. When the user leaves the viewing area, the system can detect the loss of the user's signal and can ascertain that the user is no longer within the area. The "badge" may comprise any suitable wearable component that can be worn by and carried around by a user. Such components can include bracelets, anklets, and other items that can be worn by the user. An inductive badge detector may be provided at the doorway. As the badge passes through the doorway, an inductive loop in the badge is able to draw power via an inductive coupling to the detector and is therefore able to transmit its user's secure identification signal.

In another example, a face recognition system may be used to detect users present in the area. The system may comprise one or more cameras to periodically monitor the entire viewing area. In another embodiment, a voice recognition system can be utilized to ascertain the identification of users within the viewing area. In accordance with another embodiment, an EPG system can be controlled and can receive input from one or more individual personal computers, such as laptop computers, tablet PCs and the like. In another embodiment each user has his or her own individual computer or computing device. In this case login of users into their own computing devices is used to determine the users that are present.

However, the system known from US 2003/237093 is based on the individual personal preferences defined without the influence of group interaction/behaviour

In order to make recommendations for a group of people a watching history of that group could be made, i.e. a record of what programs the persons of the group watched together in the past. An obvious way for doing this would be to create a profile for each group. If a group as a whole watches a program, this information is stored then in the watching history or profile of this group. If the group desires to watch TV together again at a later moment, the group's watching history/profile is used to make a recommendation for a new TV watching session. Such way of doing, however, has two great disadvantages. First, it is not flexible: when a certain subset of a group that previously watched together is watching together, a new profile has to be made, in which the information from the past cannot be included (since it now involves a subset and therefore a different group). For larger groups, the chance that the people in precisely the same composition will watch TV once more is very small. As a result, the situation arises that there are many profiles with unfortunately a very small and therefore nearly useless viewing history. A second disadvantage is that this system is not scalable. If the total number of users is N, then in the case of a group consisting of 2 persons n!/(2!*(n-2)!) profiles are needed; for a group of 3 persons n!/(3!*(n-3)!), and for a group of 4 persons n!/(4!*(n-4)!) etc.

US 2002/0194586 discloses automatic generation of recommendations of television programs based on past viewing patterns and preferences of a plurality of television viewers. A composite user profile is created based on individual profiles for each detected user.

US 2004/0003392 discloses a system for generating recommendations of entertainment options based on user preferences of one or more users present in a predefined viewing area. A composite user profile is created based on individual profiles for user that have been detected in a viewing area. The document gives the example that, if a mother and her three year old child are watching together, only entertainment options (cartoons) that are highly recommended by the three year old's profile would be displayed even though those entertainment options are not highly rated for the mother on her own.

### Summary

It is an object to provide for improved recommendation system and method wherein environmental information may be used in the process for outputting a choice recommendation to one or more users.

It is an aim to take into account for the influence of the group of users that jointly watch a content item on the preferences of the individual users in that group.

A recommendation system is proposed for outputting a choice recommendation - either related to TV programs, programs like movies on DVDs etc. or to other content items - to a group of one or more users based on earlier choices made by them. Data records are made per user for previous choices, each data record including a representation of the user, a representation of the choice and a representation of any other user involved with that choice. The representation of any other user involved with that choice may represent one or more other users that the user has watched a chosen content with. This information is used to generate recommendations to account for the influence of the group on the preferences of the individual persons. For the sake of data efficiency and scalability - as will be discussed below - it may be preferred that the data record includes a representation of the user, a representation of the choice and a representation of no more than one other user involved with that choice (e.g. has watched with the user), where more records are made when more other users are involved (e.g. have watched with the user).

A method for outputting a choice recommendation, e.g. related to TV programs is provided, the method comprising
- recording a watching history of users, the watching history comprising representations of watch events, the representation of a watch event for a user including information about a further user or users who with the user has jointly watched a content item;
- making a recommendation for a group of users dependent on recorded joint watching of users in the group. The recommendation may be made by a processor that has access to a memory wherein data records representing the watching history are stored. For making the recommendation, the processor may detect the users in the group in any known way, such as the ways described in US 2003/237093. The representations of watch events may be recorded by a computer into a memory, upon detection of a watch event. Also in this case, the computer may determine joint watching users involved with this watch event based on detection of users that may be performed in any known way, such as the ways described in US 2003/237093.

In an embodiment the method comprises
- receiving a request for the recommendation for a group of users;
- retrieving the watching history of all the users of the group;
- providing the watching events in the retrieved watching histories each with a weighing factor, dependent on whether the watching event represents that at least part of the users of the group have watched jointly;
- combining all weighed watching events into one common watching history;
- applying the combined watching history of the weighed watching events to a recommender system;
- using the recommender system to make a recommendation on the basis of the weighed watching events;
- outputting the recommendation.

In this way, the use of "watched with" information for watch events can be combined with existing recommendation methods for single users. The recommender system may generate the recommendation using a collaborative filtering approach or content based approach for example, which are known per se, using the common watching history for the current group that has been synthesized in this way instead of the watching history for a predetermined (group) user. In an embodiment, the weighing actor may be binary, a non-zero or zero weight being given, i.e. the watching event being incorporated in the common watching history or not, dependent on whether the watching event indicates at least part (more than one) of the users of the group have watched jointly. The users of the group may be determined for example by identifying the users that are present when the request is received. Any known way of identifying these users may be used, such as the ways described in US 2003/237093.

In an embodiment the weighing factor includes assigning a weighing to the watching history on the basis of a binary alone/together situation, comprising
- detecting whether in the present watching situation the group of users consists of one user or a plurality of users and,
- in the case that the group consists of one user only watch events are considered that represent that the user has watched TV alone, or these watching events are weighed more heavily than watch events that represent that the user has watched TV with other users; and where,
- in the case that the group consists of a plurality of users, watch events that represent that the user has watched TV with other users of the group are weighed more heavily.

A recommendation system for generating recommendations e.g. related to TV programs is provided, the system comprising
- a memory storing data records recording a watching history of users, the watching history comprising representations of watch events for a user, the representation of a watch event including information about a user or users who with the user has jointly watched a content item;
- a processor programmed to determine a recommendation for a group of users on the basis of recorded joint watching of users in the group.

According to one aspect a recommendation system is proposed for outputting a choice recommendation - either related to TV programs, DVDs etc. or to other items - to one or more users based on earlier choices made by them, wherein at least one data record is made per choice per user, each data record including a representation of the user, a representation of the choice and a representation of any other user involved with that choice. For the sake of data efficiency and scalability - as will be discussed below - it may be preferred that the data record includes a representation of the user, a representation of the choice and a representation of no more than one other user involved with that choice, where more records are made when more other users are involved.

Besides the users involved in the choice, the data record may include a representation of an environment linked to the choice. For instance, the data record may include a representation of a localization (e.g. room, geometric data etc.) linked to the choice and/or a representation of hardware and/or software linked to the choice. All those environmental information may be used in the process for outputting a choice recommendation to one or more users.

The choice (recommendation) may e.g. relate to watching a movie (including TV, DVD etc.), but also listening music, eating and/or drinking or other "activities" which can be done by a group of individual persons (users). One (commercially) interesting option is the use of the system where the recommendation made by the system is represented by an advertisement.

One aspect provides a method for outputting a choice recommendation, e.g. related to watching TV programs, to one or more users based on earlier choices made by them, wherein at least one data record is made per choice per user, each data record including a representation of the user, a representation of the choice and a representation of any other user involved with that choice.

In an embodiment, the method comprises the steps of:
a. a request is made for a recommendation;
b. the users present are identified;
c. the watching history is retrieved of all those present;
d. on the basis of one or more weighing methods the watching events in the watching histories of the users present are provided with a weighing factor;
e. all weighed watching events are combined into one common watching history;
f. the combined watching history of weighed watching events is applied to a recommender system;
g. the recommender system makes a recommendation on the basis of the weighed watching events;
h. the recommendation is output.

Additionally provides a computer program product for carrying out the method as defined above is provided. A computer program product may comprise a set of computer executable instructions stored on a tangible data carrier, such as a CD or a DVD, a magnetic disk or a semi-conductor memory for example. The set of computer executable instructions, which allow a programmable computer to carry out the method as defined above, may also be available for downloading from a remote server, for example via the Internet.

### Brief description of the drawing

Hereinafter these and other objects and aspects will be elucidated by means of a description with reference to the following figures.
- Figures la-b: show two examples of a user profile with a multi-user or co-user component;
- Figure 2: shows an exemplary data model of a user profile;
- Figure 3: shows an overview of in which way multi-user user profiles may be used for performing program recommendations; and
- Figure 4: shows an exemplary protocol stack for synchronizing a local profile with a network profile.

### Detailed description of exemplary embodiments

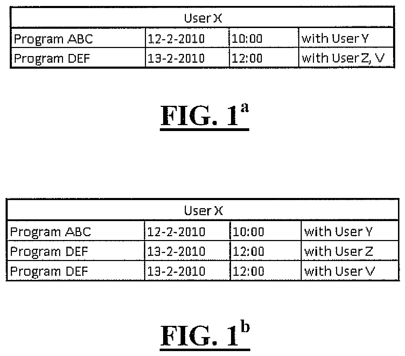

In figure 1 two examples are given of a user profile with a multi-user component, made for a user X. User X has watched two programs in the time elapsed. Therefore, two watching events have been registered: the first one for TV program ABC watched together with co-watcher Y, the second one for program DEF together with co-watchers Z and V. It is noted that for the identification and/or association of persons related to watching TV programs or other media content the means of identifying persons in a viewing area disclosed in from US 2003/237093 could be used, such as smart cards as known *as such* from US 2003/237093.

In certain cases, it may be more convenient to store a viewing event (record) with two other users (seen in figure la) than storing two separate viewing events (records) at the same time point or occurrence (seen in figure lb).

By storing the viewing-together information in the standard user profiles instead of in special group profiles, this information is much more easily used and of broader applicability. The information that user X watched the program DEF together with users Z and V can be used when Z in the future watches together only with Z or only with V, with Z and V, or even with Z, V and W. Naturally, the application of the recommendations offers the choice of what information if any is to be used.

Besides information on what program is watched, it may also be of interest to store other information per viewing event. An example of this is audio/video preferences. It may be the case when one views together with a large group of people, the sound level, e.g., becomes higher.

The viewing location may also be of interest. When two persons are watching at person A's home, the context (or environment) is different, and perhaps other choices are made than when they are watching at person B's home. Here audiovisual preferences may be applied but also the type of programs (person A may live in a student house, person B together with wife and children).

Current IP based TV architectures also support the concept of watching apart together: two people may be at different locations but watch a TV program "together." In this case, together means that they can communicate about what they are watching via an audio/video connection. For cases of this type, it is also convenient if the viewing events also support split-location viewing. For each of the co-viewers, therefore, a separate viewing location may be stored.

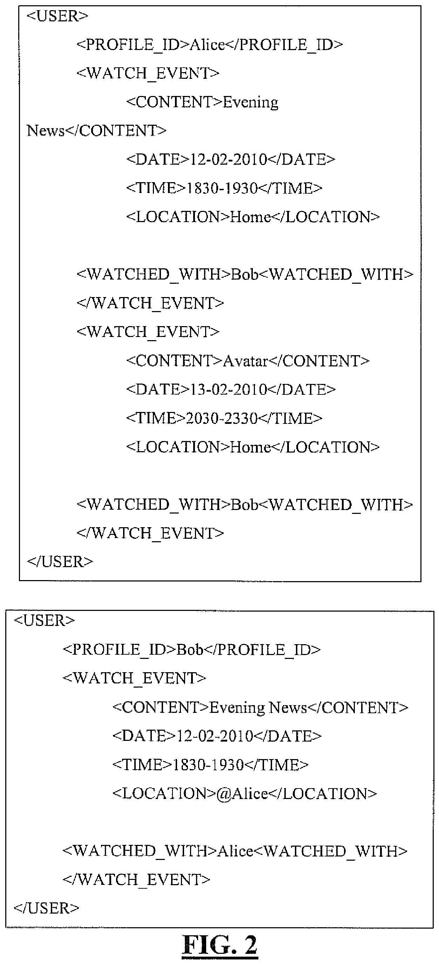

Figure 2 shows an exemplary data model of a user profile in these cases for a user A(lice) and B(ob) respectively.

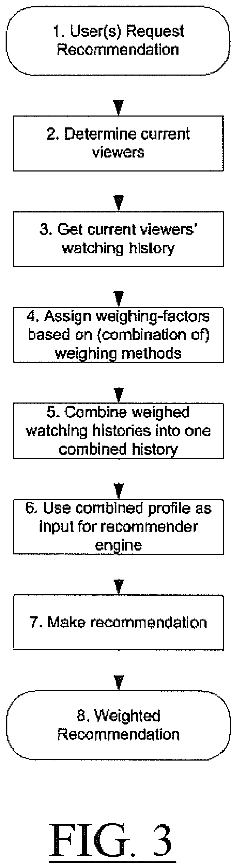

Figure 3 shows an overview of in which way multi-user user profiles may be used for performing program recommendations:
1. A request is made for a program recommendation
2. The present users are identified (if not done already). This may e.g. be performed as disclosed in an earlier patent of Microsoft®, in US 2003/237093.
3. The watching history is retrieved of all users present.
4. On the basis of one of the four weighing methods below (or a combination of them) all watching events in the watching histories of the users present are provided with a weighing factor.
5. All weighed watching events are combined into one common watching history which is generated specifically for this situation.
6. The combined watching history of weighed watching events is applied to a recommender system (e.g. a collaborative filter).
7. The recommender system makes a recommendation on the basis of the weighed watching events.
8. The recommendation is output to e.g. the user(s).

The advantage of combining the weighed watching events into one combined watching history is that the above system can be used with all current recommender systems; the recommender itself does not see any difference between this combined multi-user watching history and a standard single-user watching history.

Below, four methods are presented, to be used for assigning weights to specific watching events, on the basis of the multi-user watching histories of the users present.

### Binary multi-user Component

The most simple way to assign a weighing to the watching history is on the basis of a binary alone/together situation. In this case, during the making of the recommendation it is detected whether the present watching situation exists from one person or from several persons. In the case that one person is watching TV, for making the recommendation, either only watching events are considered where the user watches TV alone, or these watching events are weighed more heavily. In the case that several persons watch TV, the watching together watching events are weighed more heavily.

| Alice | | |
|---|---|---|
| 12-2-2010 20:00-20:30 | 20:00 News (news) | (alone) |
| 13-2-2010 21:30-23:30 | Spiderman (action movie) | Bob |
| 15-2-2010 20:00-23:00 | Casablanca (romantic movie) | Charlie |
| 21-2-2010 20:30-22:00 | Batman (action movie) | Bob, David |

| Bob | | |
|---|---|---|
| 11-2-2010 13:00-14:00 | Friends (comedy) | David |
| 12-2-2010 20:00-20:30 | Stock market (financial) | (alone) |
| 13-2-2010 21:30-23:30 | Spiderman (action movie) | Alice |
| 21-2-2010 20:30-22:00 | Batman (action movie) | Alice, David |

### User overlap

A more specific way to weigh the watching history is to weigh more heavily watching events where one or several of the present watchers were also present. Suppose that e.g. Alice is going to watch TV together with Bob, then the watching events of Alice and Bob are weighed more heavily )in this case Spiderman and Batman). The watching event of Alice and Charlie (Casablanca) is not counted more heavily while the users do not correspond here.

| Alice | | |
|---|---|---|
| 12-2-2010 20:00-20:30 | 20:00 News (news) | (alone) |
| 13-2-2010 21:30-23:30 | Spiderman (action movie) | Bob |
| 15-2-2010 20:00-23:00 | Casablanca (romantic movie) | Charlie |
| 21-2-2010 20:30-22:00 | Batman (action movie) | Bob, David |

| Bob | | |
|---|---|---|
| 11-2-2010 13:00-14:00 | Friends (comedy) | David |
| 12-2-2010 20:00-20:30 | Stock market (financial) | (alone) |
| 13-2-2010 21:30-23:30 | Spiderman (action movie) | Alice |
| 21-2-2010 20:30-22:00 | Batman (action movie) | Alice, David |

| Paul | | |
|---|---|---|
| 11-2-2010 17:00-19:00 | The Big Bang Theory (comedy) | Bob |

### Common friend

The "common friend" method can be used when two users do not have a common history, but when they do have common friends. "Friends" implies in this case that users A and B watched together never before but they watched earlier together with user C. In the above example Alice and Paul e.g. never watched together earlier; however they both watched together with Bob. In this case the watching events of both Alice and Paul which include Bob, would weigh more heavily (Spiderman, Batman and The Big Bang Theory).

### Comparable relationship

The comparable relationship method makes use of the type of relations between several users, In this case the multi-user component has to have, beside information about with whom a watching event occurred, also information which relation the user has with this person. A possible source of this information could be e.g. social networks. Suppose that Alice is going to watch TV with her colleague Ethan with whom she never watched TV before. In this case watching events between Alice and Bob might going to weigh more heavily, as the relation between Alice and Bob is comparable with the relation between Alice and Ethan (both colleagues).

| Alice | | |
|---|---|---|
| 12-2-2010 20:00-20:30 | 20:00 News (news) | (alone) |
| 13-2-2010 21:30-23:30 | Spiderman (action movie) | Bob (colleague) |
| 15-2-2010 20:00-23:00 | Casablanca (romantic movie) | Charlie (in a relationship) |
| 21-2-2010 20:30-22:00 | Batman (action movie) | Bob (colleague), David (friend) |

| Bob | | |
|---|---|---|
| 11-2-2010 13:00-14:00 | Friends (comedy) | David (friend) |
| 12-2-2010 20:00-20:30 | Stock market (financial) | (alone) |
| 13-2-2010 21:30-23:30 | Spiderman (action movie) | Alice (colleague) |
| 21-2-2010 20:30-22:00 | Batman (action movie) | Alice (colleague), David (friend) |

Finally, it is noted that when two users watched a program together, this watching event thus has to be stored into two profiles. This requires some form of synchronization. Dependent of where profile information is stored (locally/centrally) this synchronization can have different forms.

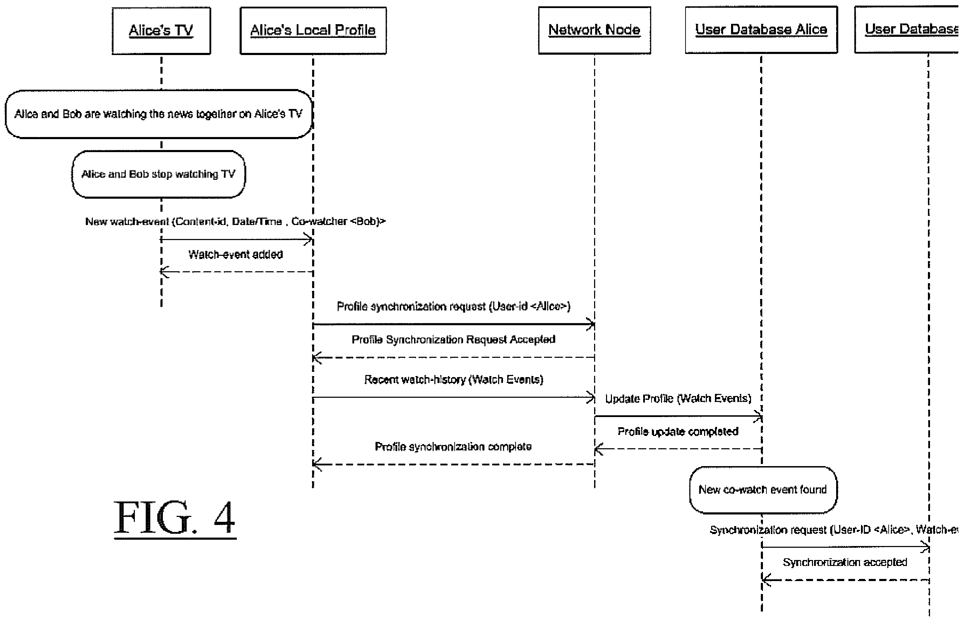

Figure 4 shows how this could work in the case of a local profile that is periodically synchronized with a network profile. A similar situation can take place in which all profiles are stored locally and, e.g., a synchronization action has to be performed with the Bob's TV or even with a mobile device (RFID tag, mobile phone).

A recommendation system may be constituted by a central unit, such as a suitably programmed personal computer, and user terminals. The central unit and the user terminals are suitably connected via the internet or other means. The central unit, which contains a processor configured for running a software program stored in a memory coupled to the processor, comprises a choice recommendation output unit configured for outputting recommendations to one or more users, which recommendations are based on earlier choices made by those users. The central unit is further configured for making at least one data record per choice and per user, each data record including at least a representation of the user, a representation of the choice and a representation of any other user involved with that choice. The data records thus made may also be stored in the memory mentioned above. The choice recommendation output unit may be at least partially constituted by a suitable software program or software program unit, which can be executed by the processor referred to above, but at least part of the choice recommendation output unit may be implemented in hardware. The user terminals, which may be constituted by mobile (that is, cellular) telephone units, comprise a keypad and/or a suitably configured touch-screen for entering selection information. The user terminals may, alternatively or additionally, be configured for speech recognition. In some embodiments, the user terminals may be absent and the central unit is connected to the television set and/or personal computer (or any combined viewing unit) of each user so as to gather user preference (that is, choice) information. Those skilled in the art will be able to design alternative embodiments of the recommendation system.

A recommendation system is provided that comprises means for outputting a choice recommendation to one or more users based on earlier choices made by them, wherein at least one data record is made per choice per user, each data record including a representation of the user, a representation of the choice and a representation of any other user involved with that choice.

In an embodiment wherein the data record includes a representation of the user, a representation of the choice and a representation of no more than one other user involved with that choice, where more records are made when more other users are involved. The data record may include a representation of an environment linked to the choice. In a further embodiment the data record includes a representation of a localization linked to the choice.

In an embodiment, the data record includes a representation of hardware and/or software linked to the choice. In an embodiment wherein the choice relates to watching a movie and/or to listening to music. In an embodiment the choice relates to eating and/or drinking. In an embodiment the recommendation is represented by an advertisement.

Method is provided for outputting a choice recommendation, e.g. related to watching TV programs, to one or more users based on earlier choices made by them, wherein at least one data record is made per choice per user, each data record including a representation of the user, a representation of the choice and a representation of any other user involved with that choice.

In an embodiment the method comprises the steps that
a. a request is made for a recommendation;
b the users present are identified;
c. the watching history is retrieved of all those present;
d. on the basis of one or more weighing methods the watching events in the watching histories of the users present are provided with a weighing factor;
e. all weighed watching events are combined into one common watching history;
f. the combined watching history of weighed watching events is applied to a recommender system;
g. the recommender system makes a recommendation on the basis of the weighed watching events;
h. the recommendation is output.

In an embodiment one of said weighing methods includes assigning a weighing to the watching history on the basis of a binary alone/together situation, where it is detected whether the present watching situation exists from one person or from several persons and, in the case that one person is watching either only watching events are considered where the user watches TV alone, or these watching events are weighed more heavily; where, in the case that several persons watch TV, the watching together watching events are weighed more heavily.

In an embodiment one of said weighing methods includes weighing more heavily watching events where one or several of the present watchers were also present.

In an embodiment one of said weighing methods includes, in particular when users do not have a common watching history, to detect possible common friends and to base the weighing on having or not having common friends.

In an embodiment one of said weighing methods includes detecting and taking in account relation types between the relevant users, e.g. based on data derived from a social network server.

In an embodiment the method is implemented as a software program product which is preferably stored on a tangible carrier.

A system is provided that takes account of the fact that people have different watching demands when they are in a group. Single person profiles are used that have a multi-user component: it records not only what a user has watched, but also who the user has watched this with.

When users have watched content such as news jointly watch events are stored in the profiles of the users. The stored watch event for a user contains a "watched with" field identifying the other user, or users, with which the user watched the content. The identity of users that jointly watch content may be detected by the means described for this purpose in US 2003/237093. This may be done at the location of a TV for example. Then a new watch event for user, i.e. a data record comprising an identification of the content and at least the co-watcher may be created and transmitted to a storage device for the profile. The watch event may be transmitted for example when the users stop joint watching of specific content. A corresponding watch event, or watch events may be created for the co-watcher or co-watchers.

By storing "watched with" information in the profiles of users instead of in profiles of groups the information becomes more useful and more broadly applicable. The information that a user X has watched a program DEF with users Z and V can be used when X later watches with only Z, or with V alone or with Z and V, or with users Z, V and W.

In other words, a data model is used wherein watching history of a user is expanded with information about a person or persons who with the user has watch with jointly. A synchronization protocol is used to update the watching history and to keep it up to date. An algorithm is used to make group recommendations on the basis of the joint watching history.

When a user ("Alice") requests a recommendation, the system tests whether the user is watching alone or with co-watchers. The presence of co-watchers can be determined with any known method, such as the methods described in US 2003/237093, including the use of login and logoff mechanism for the users, a fingerprint reader panel, a physical push button provided on a display panel, a radio smartcard badge, an inductive badge, a face recognition system, a voice recognition system, one or more individual personal computers of the users, or computing device for example. If the user is watching alone, the history set for the user is retrieved and used to generate a program recommendation. If the user is watching with co-watchers, the identity of the co-watchers is determined (e.g. "Bob" or "Bob and Charlie") a history set for all of the users is retrieved and used to generate the program recommendation.

In general, in the computation of the recommendation for the current group of users from recorded watch events, more weight is given to watch events that indicate that a user from the current group watched content with one or more co-watchers from the current group.

In an embodiment this may be done by computing a common watching history for the current group from the recorded watch events for users in the current group. Thus, the common watching history is adapted to the composition of current group. Then the computed common watching history can be used to determine a recommendation in a way that is known per se for computing a recommendation from the watching history of a single user. A known collaborative filtering approach, or known a content based approach may be used to compute the recommendation.

As is known per se, a collaborative filtering approach to recommend a content item to a user comprises selecting a matching user or matching users and recommending content items that have received a high score from the matching user(s). The score can be an implicit score, such as a score based on viewing duration by the matching user(s), or an explicit score received from the matching user(s). In known collaborative filtering selection of a matching user or matching users comprises comparing scores given by the user for content items with scores given by potential matching users for the same content items, and selecting those users from the potential matching users that have given the most similar scores. A user match score may be computed for each potential matching user dependent on differences or correlations between scores given for the same content items, potential matching user(s) being selected as matching user(s) dependent on the difference score or the correlations. Potential matching user(s) may be selected dependent on whether their difference score is lower than, or their correlation score is higher than that of any (or all but a predetermined number) of the other potential matching user(s) or potential matching user(s) may be selected dependent on whether the difference score is below or the correlation score is above a threshold. When collaborative filtering is used to provide a recommendation for a group, a synthetic viewing history for the group comprising watch events selected using the "watched with" information may be constructed for use to select the matching user(s). In a further embodiment, contributions to the match score may be weighed dependent on whether the watch events indicate that a user from the current group watched content with one or more co-watchers from the current group.

As is known per se, a content based approach comprises computing a content item match score for a content item from attribute values of the content item weighed with attribute weighing factors from a user profile, content items being recommended based on the content item match score (selecting content items in similar ways as matching users may be selected in the case of collaborative filtering). As is known per se, the attribute weighing factors in the user profile for the user may be determined based on the viewing history, e.g. based on scores for content items given explicitly or implicitly by a user, the scores being based for example on recorded viewing duration by the user of content items with known attribute values. When content item attribute-user profile matching is applied to obtain a recommendation for the group, a synthetic viewing history for the group comprising watch events selected using the "watched with" information may be constructed for use to determine the attribute weighing factors. In a further embodiment, the contributions of different watch events to the computation of attribute weighing factors may be adjusted dependent on whether the watch events indicate that a user from the current group watched content with one or more co-watchers from the current group.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method for outputting a choice recommendation related to content items, the method comprising
- detecting the identity of a further user or further users who with a user has watched content;
- creating a representation of a new watch event for the user, the representation comprising an indication of the content and of the detected further user or further users who with the user has jointly watched the content item;
- recording the representation of the new watch event in a watching history of the user;
- receiving a request for the recommendation;
- determining current users, whereby a group of present users is determined;
- retrieving the watching history of all the present users of the group;
- making a recommendation for the group of present users dependent on recorded joint watching of present users in the group.

2. A method according to claim 1, wherein the step of making the recommendation comprises
- providing the watching events in the retrieved watching histories each with a weighing factor, dependent on whether the watching event represents that at least part of the present users of the group have watched jointly;
- combining all weighed watching events into one common watching history;
- applying the combined watching history of the weighed watching events to a recommender system;
- using the recommender system to make a recommendation on the basis of the weighed watching events;
- outputting the recommendation.

3. Method according to claim 2, wherein said providing with the weighing factor includes assigning a weighing to the watching history on the basis of a binary alone/together situation, comprising
- detecting whether in the present watching situation the group of present users consists of one user or a plurality of users and,
- in the case that the group consists of one user only watch events are considered that represent that the user has watched TV alone, or these watching events are weighed more heavily than watch events that represent that the user has watched TV with other users; and where,
- in the case that the group consists of a plurality of present users, watch events that represent that the user has watched TV with other present users of the group are weighed more heavily.

4. Method according to claim 2, wherein said providing with the weighing factor includes assigning a heavier weight to the watching events for a first present user in the group that represent that where one or several of the other present users in the group watched with the first present user in the group.

5. Method according to claim 2, wherein said providing with the weighing factor includes, in particular when present users of the group do not have watch events representing that they watched with other determined users of the group, detecting possible common friends and to base the weighing factor on having or not having common friends.

6. Method according to claim 2, wherein said providing with the weighing factor includes detecting and taking in account relation types between the relevant users, e.g. based on data derived from a social network server.

7. Computer program product comprising a program for a computer that, when executed by the processor, causes the computer to execute the method of any of the preceding claims.

8. Recommendation system for generating recommendations according to claim 1, the system comprising
- a memory storing data records recording the watching histories of the users;
- means for determining current users, whereby a group of present users is determined; a processor programmed to
- receive a request for the recommendation for the group of present users determined by the means for determining current users;
- retrieve the watching history of all the present users of the group; and
- determine a recommendation for the group of present users on the basis of recorded joint watching of present users in the group in the watching history.

9. System according to claim 8, wherein the processor is programmed to
- provide the watching events in the retrieved watching histories each with a weighing factor, dependent on whether the watching event represents that at least part of the present users of the group have watched jointly;
- combine all weighed watching events into one common watching history;
- apply the combined watching history of the weighed watching events to a recommender system;
- use the recommender system to make a recommendation on the basis of the weighed watching events;
- output the recommendation.

10. System according to claim 8 or 9, wherein each data record includes a representation of the user, a representation of a content and a representation of no more than one other user that the user has watched the content with, a plurality of data records including representations of respective other user that the user has watched the content with.

11. System according to any of claims 8-10, wherein at least one of the data records includes a representation of a watching environment wherein the content was watched.

12. System according to any of claims 8-11 wherein at least one of the data records includes a representation of location at which the user watched the content.

13. System according to any of claims 8-12, wherein at least one of the data records includes a representation of hardware and/or software used to watch the content.

## Patentansprüche

1. Verfahren zum Ausgeben einer Wahlempfehlung, die sich auf Inhaltselemente bezieht, wobei das Verfahren umfasst:
Ermitteln der Identität eines weiteren Benutzers oder weiterer Benutzer, der/die mit einem Benutzer Inhalt angesehen hat/haben;
Erzeugen einer Darstellung eines neuen Ansehereignisses für den Benutzer, wobei die Darstellung eine Angabe des Inhalts und des ermittelten weiteren Benutzers oder der ermittelten weiteren Benutzer aufweist, der/die mit dem Benutzer gemeinsam das Inhaltselement angesehen hat/haben;
Aufzeichnen der Darstellung des neuen Ansehereignisses in einer Ansehhistorie des Benutzers;
Empfangen einer Anfrage für die Empfehlung;
Ermitteln aktueller Benutzer, wobei eine Gruppe gegenwärtiger Benutzer ermittelt wird;
Abrufen der Ansehhistorie aller gegenwärtigen Benutzer der Gruppe;
Abgeben einer Empfehlung für die Gruppe gegenwärtiger Benutzer in Abhängigkeit von dem aufgezeichneten gemeinsamen Ansehen gegenwärtiger Benutzer in der Gruppe.

2. Verfahren nach Anspruch 1, wobei der Schritt des Abgebens der Empfehlung aufweist
Versehen der Ansehereignisse in den abgerufenen Ansehhistorien jeweils mit einem Gewichtungsfaktor, in Abhängigkeit davon, ob das Ansehereignis darstellt, dass wenigstens ein Teil der gegenwärtigen Benutzer der Gruppe gemeinsam angesehen hat;
Kombinieren aller gewichteten Ansehereignisse in einer gemeinsamen Ansehhistorie;
Anwenden der kombinierten Ansehhistorie der gewichteten Ansehereignisse auf ein Empfehlungssystem;
Verwenden des Empfehlungssystems, um eine Empfehlung auf der Grundlage der gewichteten Ansehereignisse abzugeben;
Ausgeben der Empfehlung.

3. Verfahren nach Anspruch 2, wobei das Versehen mit dem Gewichtungsfaktor das Zuweisen einer Gewichtung zu der Ansehhistorie auf der Grundlage einer binären Alleine-/Zusammen-Situation aufweist, umfassend
Ermitteln, ob in der gegenwärtigen Ansehsituation die Gruppe gegenwärtiger Benutzer aus einem Benutzer oder einer Vielzahl von Benutzern besteht, und
im Fall, dass die Gruppe nur aus einem Benutzer besteht, werden nur Ansehereignisse berücksichtigt, die darstellen, dass der Benutzer alleine ferngesehen hat, oder diese Ansehereignisse werden stärker gewichtet als Ansehereignisse, die darstellen, dass der Benutzer zusammen mit anderen Benutzern ferngesehen hat; und wobei
im Fall, dass die Gruppe aus einer Vielzahl gegenwärtiger Benutzer besteht, werden Ansehereignisse, die darstellen, dass der Benutzer mit anderen gegenwärtigen Benutzern der Gruppe ferngesehen hat, stärker gewichtet.

4. Verfahren nach Anspruch 2, wobei das Versehen mit dem Gewichtungsfaktor das Zuweisen eines stärkeren Gewichts zu den Ansehereignissen für einen ersten gegenwärtigen Benutzer in der Gruppe umfasst, die darstellen, wo ein oder mehrere der anderen gegenwärtigen Benutzer in der Gruppe mit dem ersten gegenwärtigen Benutzer in der Gruppe ferngesehen haben.

5. Verfahren nach Anspruch 2, wobei das Versehen mit dem Gewichtungsfaktor, insbesondere, wenn gegenwärtige Benutzer der Gruppe keine Ansehereignisse haben, die darstellen, dass sie mit anderen bestimmten Benutzern der Gruppe angesehen haben, das Ermitteln möglicher gemeinsamer Freunde umfasst, und das Basieren des Gewichtungsfaktors auf dem Vorhandensein oder der Abwesenheit gemeinsamer Freunde.

6. Verfahren nach Anspruch 2, wobei das Versehen mit dem Gewichtungsfaktor das Ermitteln und Berücksichtigen von Beziehungsarten zwischen den relevanten Benutzern umfasst, z.B. auf der Grundlage von Daten, die von einem sozialen Netzwerkserver abgeleitet sind.

7. Computerprogrammerzeugnis, das ein Programm für einen Computer aufweist, das, wenn es von dem Prozessor ausgeführt wird, veranlasst, dass der Computer das Verfahren nach einem der vorhergehenden Ansprüche durchführt.

8. Empfehlungssystem zum Erzeugen von Empfehlungen gemäß Anspruch 1, wobei das System aufweist
einen Speicher, der Datenaufzeichnungen speichert, die die Ansehhistorien der Benutzer aufzeichnen;
Mittel zum Ermitteln aktueller Benutzer, wobei eine Gruppe gegenwärtiger Benutzer ermittelt wird;
einen Prozessor, der programmiert ist zum
Empfangen einer Anfrage für die Empfehlung für die Gruppe gegenwärtiger Benutzer, die durch das Mittel zum Ermitteln aktueller Benutzer ermittelt wurde;
Abrufen der Ansehhistorie aller gegenwärtigen Benutzer der Gruppe; und
Ermitteln einer Empfehlung für die Gruppe gegenwärtiger Benutzer auf der Grundlage aufgezeichneten gemeinsamen Ansehens gegenwärtiger Benutzer in der Gruppe in der Ansehhistorie.

9. System nach Anspruch 8, wobei der Prozessor programmiert ist zum Versehen der Ansehereignisse in den abgerufenen Ansehhistorien jeweils mit einem Gewichtungsfaktor, in Abhängigkeit davon, ob das Ansehereignis darstellt, dass wenigstens ein Teil der gegenwärtigen Benutzer der Gruppe gemeinsam angesehen haben;
Kombinieren aller gewichteten Ansehereignisse in einer gemeinsamen Ansehhistorie;
Anwenden der kombinierten Ansehhistorie der gewichteten Ansehereignisse auf ein Empfehlungssystem;
Verwenden des Empfehlungssystems, um eine Empfehlung auf der Grundlage der gewichteten Ansehereignisse abzugeben;
Ausgeben der Empfehlung.

10. System nach Anspruch 8 oder 9, wobei jede Datenaufzeichnung eine Darstellung des Benutzers, eine Darstellung eines Inhalts und eine Darstellung von nicht mehr als einem weiteren Benutzer, mit dem der Benutzer den Inhalt angesehen hat, aufweist, wobei eine Vielzahl von Datenaufzeichnungen Darstellungen eines jeweiligen anderen Benutzers enthalten, mit denen der Benutzer den Inhalt angesehen hat.

11. System nach einem der Ansprüche 8-10, wobei wenigstens eine der Datenaufzeichnungen eine Darstellung einer Ansehumgebung aufweist, in der der Inhalt angesehen wurde.

12. System nach einem der Ansprüche 8-11, wobei wenigstens eine der Datenaufzeichnungen eine Darstellung eines Orts aufweist, an dem der Benutzer den Inhalt angesehen hat.

13. System nach einem der Ansprüche 8-12, wobei wenigstens eine der Datenaufzeichnungen eine Darstellung von Hardware und/oder Software aufweist, die zum Ansehen des Inhalts verwendet wird.

## Revendications

1. Procédé de sortie d'une recommandation de choix liée à des éléments de contenu, le procédé comprenant
- la détection de l'identité d'un autre utilisateur ou d'autres utilisateurs qui, avec un utilisateur, ont regardé le contenu ;
- la création d'une représentation d'un nouvel événement à regarder pour l'utilisateur, la représentation comprenant une indication du contenu et de l'autre utilisateur ou des autres utilisateurs détectés qui, avec l'utilisateur, ont regardé conjointement l'élément de contenu ;
- l'enregistrement de la représentation du nouvel événement à regarder dans un historique de visionnage de l'utilisateur ;
- la réception d'une demande de recommandation ;
- la détermination des utilisateurs actuels, moyennant quoi un groupe d'utilisateurs actuels est déterminé ;
- la récupération de l'historique de visionnage de tous les utilisateurs actuels du groupe ;
- la formulation d'une recommandation pour le groupe d'utilisateurs actuels en fonction du visionnage conjoint enregistré des utilisateurs actuels dans le groupe.

2. Procédé selon la revendication 1, dans lequel l'étape de formulation de la recommandation comprend
- la fourniture à chacun des événements de visionnage dans les historiques de visionnage récupérés d'un facteur de pondération, selon que l'événement de visionnage représente au moins une partie des utilisateurs actuels du groupe qui ont regardé conjointement ;
- la combinaison de tous les événements de visionnage pondérés en un seul historique de visionnage commun ;
- l'application de l'historique de visionnage combiné des événements de visionnage pondérés à un système de recommandation ;
- l'utilisation du système de recommandation pour formuler une recommandation sur la base des événements de visionnage pondérés ;
- l'émission en sortie de la recommandation.

3. Procédé selon la revendication 2, dans lequel ladite fourniture du facteur de pondération comprend l'attribution d'un poids à l'historique de visionnage sur la base d'une situation binaire seul/ensemble, comprenant
- la détection si, dans la situation de visionnage actuelle, le groupe d'utilisateurs actuels se compose d'un seul utilisateur ou d'une pluralité d'utilisateurs et,
- dans le cas où le groupe est constitué d'un seul utilisateur, seuls sont pris en compte les événements de visionnage qui représentent que l'utilisateur a regardé la télévision seul, ou ces événements de visionnage pèsent plus lourdement que les événements de visionnage qui indiquent que l'utilisateur a regardé la télévision avec d'autres utilisateurs ; et où,
- dans le cas où le groupe est constitué d'une pluralité d'utilisateurs actuels, les événements de visionnage qui représentent que l'utilisateur a regardé la télévision avec d'autres utilisateurs actuels du groupe pèsent plus lourdement.

4. Procédé selon la revendication 2, dans lequel ladite fourniture du facteur de pondération comprend l'attribution d'un poids plus lourd aux événements de visionnage pour un premier utilisateur actuel dans le groupe qui représentent ceux où un ou plusieurs des autres utilisateurs actuels dans le groupe ont regardé avec le premier utilisateur actuel dans le groupe.

5. Procédé selon la revendication 2, dans lequel ladite fourniture du facteur de pondération comprend, en particulier lorsque des utilisateurs actuels du groupe n'ont pas d'événements de visionnage représentant qu'ils ont regardé avec d'autres utilisateurs déterminés du groupe, la détection d'éventuels amis communs et baser le facteur de pondération sur le fait d'avoir ou non des amis communs.

6. Procédé selon la revendication 2, dans lequel ladite fourniture du facteur de pondération comprend la détection et la prise en compte des types de relations entre les utilisateurs concernés, par ex. sur la base de données provenant d'un serveur de réseau social.

7. Produit programme informatique comprenant un programme pour ordinateur qui, lorsqu'il est exécuté par le processeur, amène l'ordinateur à exécuter le procédé de l'une quelconque des revendications précédentes.

8. Système de recommandation pour générer des recommandations selon la revendication 1, le système comprenant
- une mémoire stockant des enregistrements de données enregistrant les historiques de visionnage des utilisateurs ;
- un moyen pour déterminer des utilisateurs actuels, moyennant quoi un groupe d'utilisateurs actuels est déterminé ;
- un processeur programmé pour
- recevoir une demande de recommandation pour le groupe d'utilisateurs actuels déterminé par le moyen de détermination des utilisateurs actuels ;
- récupérer l'historique de visionnage de tous les utilisateurs actuels du groupe ; et
- déterminer une recommandation pour le groupe d'utilisateurs actuels sur la base d'un visionnage conjoint enregistré des utilisateurs actuels dans le groupe dans l'historique de visionnage.

9. Système selon la revendication 8, dans lequel le processeur est programmé pour
- fournir à chacun des événements de visionnage dans les historiques de visionnage récupérés un facteur de pondération, selon que l'événement de visionnage représente le fait qu'au moins une partie des utilisateurs actuels du groupe ont regardé conjointement ;
- combiner tous les événements de visionnage pondérés en un seul historique de visionnage commun ;
- appliquer l'historique de visionnage combiné des événements de visionnage pondérés à un système de recommandation ;
- utiliser le système de recommandation pour formuler une recommandation sur la base des événements de visionnage pondérés ;
- émettre en sortie la recommandation.

10. Système selon la revendication 8 ou 9, dans lequel chaque enregistrement de données comprend une représentation de l'utilisateur, une représentation d'un contenu et une représentation de pas plus d'un autre utilisateur avec lequel l'utilisateur a regardé le contenu, une pluralité d'enregistrements de données comprenant des représentations de l'autre utilisateur respectif avec lequel l'utilisateur a regardé le contenu.

11. Système selon l'une quelconque des revendications 8 à 10, dans lequel au moins l'un des enregistrements de données comprend une représentation d'un environnement de visionnage dans lequel le contenu a été regardé.

12. Système selon l'une quelconque des revendications 8 à 11, dans lequel au moins l'un des enregistrements de données comprend une représentation de l'emplacement au niveau duquel l'utilisateur a regardé le contenu.

13. Système selon l'une quelconque des revendications 8 à 12, dans lequel au moins l'un des enregistrements de données comprend une représentation du matériel et/ou du logiciel utilisé pour regarder le contenu.
